# FASCICULE DE BREVET EUROPEEN

(11) **EP 1 894 771 B1**
(45) Date de publication et mention de la délivrance du brevet: **25.11.2009**
(21) Numéro de dépôt: 07115318.3
(22) Date de dépôt: 30.08.2007
(51) Int. Cl.: B60N 2/28

(54) **Siège auto pour enfant pivotant entre une position d'utilisation et au moins une position d'installation, à gâchette**
Kraftfahrzeugsitz für ein Kind, drehbar zwischen einer Gebrauchsposition und mindestens einer Einstiegposition, mit einem Auslöser
Automotive seat for a child pivotable between a use position and at least one access position, with a trigger

(30) Priorité: 01.09.2006 FR 0607707
(43) Date de publication de la demande: 05.03.2008
(73) Titulaire: Dorel France SA, 49309 Cholet Cedex (FR)
(72) Inventeur: Lhomme, Gilles, 85180 Château d'Olonne (FR); Biaud, Richard, 49340 Trementines (FR)
(74) Mandataire: Bioret, Ludovic

(56) Documents cités:
- EP-A- 1 110 807
- EP-A- 1 625 967
- EP-A- 1 625 968
- US-B1- 6 773 065

## Description

### 1. Domaine de l'invention

Le domaine de l'invention est celui de la puériculture. Plus précisément, l'invention concerne les sièges auto pour enfant destinés à être installés dans un véhicule.

Plus précisément encore, l'invention concerne les sièges auto dits pivotants pour enfant, mobiles de façon à prendre au moins une position d'installation (face à une portière) et une position d'utilisation (face à la route).

### 2. Art antérieur

Dans les sièges auto pour enfant, une des difficultés est l'accessibilité, du fait notamment de l'espace réduit laissé par la portière et le siège du véhicule. Il est généralement peu aisé d'installer l'enfant dans le siège auto pour enfant, ou de l'extraire de celui-ci.

Pour faciliter l'installation de l'enfant, il a donc été proposé de rendre pivotant le siège auto pour enfant par rapport à une embase ou une structure fixe, le siège auto pour enfant étant susceptible d'être déplacé entre :
- au moins une position d'installation de l'enfant, face à une portière latérale (il y a en général deux positions d'installation, le siège auto pour enfant pouvant tourner à gauche ou à droite) ; et
- une position de transport ou de voyage ou d'utilisation, face à la route.

L'invention concerne en particulier ce type de sièges auto pour enfant.

Pour des raisons de sécurité, il est souhaitable que l'embase maintienne le siège auto pour enfant en au moins deux zones, en partie basse (au niveau de l'assise) et en partie haute (au voisinage la partie supérieure du dossier). Pour cela, l'embase présente deux portions sensiblement perpendiculaires, l'une reposant sur l'assise du siège du véhicule, et recevant l'assise du siège auto pour enfant, et une autre s'étendant sensiblement verticalement, le long du dossier du siège du véhicule. Cette dernière partie de l'embase comprend dans sa partie supérieure des moyens de solidarisation avec la partie supérieure du dossier du siège auto pour enfant.

Des solutions de solidarisation du dossier du siège auto pour enfant avec l'embase ont été envisagées. Certaines mettent en oeuvre des systèmes de coulisse prévus en partie supérieure du dossier du siège auto pour enfant et destinés à coopérer avec un crochet solidaire de l'embase qui se verrouille dès que le siège auto pour enfant pivote de la position d'installation à la position d'utilisation.

Une telle technique est par exemple divulguée dans le document de brevet EP-1625968

Cette double liaison (partie basse et partie haute) renforce bien entendu la sécurité, notamment en cas de choc. Cependant, il peut arriver qu'une mauvaise manipulation du siège auto pour enfant conduise à ce que le système de solidarisation du dossier du siège auto pour enfant avec l'embase ne se verrouille pas ou mal.

En effet, le verrouillage d'un tel système de solidarisation suppose que l'utilisateur fasse pivoter convenablement le siège auto pour enfant vers la position d'utilisation, de façon que le système de coulisse coopère bien avec le crochet de manière à ce que celui-ci se verrouille. Or certains utilisateurs, dans certains cas de mauvaise utilisation, rares mais possibles comme le montrent des tests effectués sur des produits, peuvent forcer sur le dossier de façon à l'éloigner de l'embase, ce qui peut faire que le siège auto pour enfant pivote sans que le système de coulisse et le crochet ne coopèrent de sorte que le siège auto pour enfant arrive en position d'utilisation sans que le système de solidarisation ne se soit verrouillé.

Même si l'utilisateur s'aperçoit de son erreur de manipulation, il ne peut assurer par lui-même le verrouillage, à moins de refaire intégralement la manoeuvre et donc de faire pivoter le siège auto pour enfant en position d'installation puis en position face à la route de façon que le système de solidarisation se verrouille. Par mégarde ou par négligence, il est donc possible que, dans certains cas rares le siège auto pour enfant soit utilisé sans que le système de solidarisation ne se soit verrouillé.

Le document EP-A-1 110 807 décrit un siège auto pour enfant conforme au préambule de la revendication 1.

### 3. Objectifs de l'invention

L'invention a notamment pour objectif de pallier ces inconvénients de l'art antérieur.

Il est important de noter ici que l'identification de ce problème fait partie en soi de l'invention. En effet, le problème de la mauvaise utilisation possible d'un siège auto pour enfant pivotant, et donc de la possibilité que, dans certains cas, l'accrochage puisse ne pas s'effectuer correctement malgré les moyens de guidage en pivotement mis en oeuvre, n'est pas évident pour l'homme du métier, qui considère que la présence de ces moyens de guidage résout le problème de l'accrochage en partie haute. Les inventeurs ont détecté ce problème spécifique et nouveau.

Plus précisément, un objectif de l'invention est de fournir un siège auto pivotant pour enfant, qui présente de bonnes qualités de sécurité, et notamment dont le siège auto pour enfant est efficacement et systématiquement maintenu par la partie supérieure de son dossier, quelles que soient les éventuelles mauvaises manipulations.

Un autre objectif de l'invention est de fournir un tel siège auto pivotant pour enfant dont la partie supérieure de son dossier et l'embase se solidarisent quelles que soient les circonstances dans lesquelles il est pivoté et manipulé d'une position d'installation à une position d'utilisation.

Encore un objectif de l'invention est de proposer un tel siège auto pour enfant dont la partie supérieure du dossier et l'embase puisse être solidarisées après que le siège auto pour enfant est placé en position face à la route.

Un objectif secondaire visé par l'invention est de fournir un tel siège auto pour enfant permettant à son utilisateur de savoir si la partie supérieure du dossier est correctement solidarisée à l'embase en position d'utilisation.

L'invention a encore pour objectif de fournir un tel siège auto pour enfant qui soit relativement peut coûteux à fabriquer, et qui soit fiable dans le temps.

### 4. Exposé de l'invention

Ces objectifs, ainsi que d'autres qui apparaîtront par la suite, sont atteints à l'aide d'un siège auto pour enfant, comportant une embase et une assise pivotant par rapport à ladite embase de façon à prendre au moins deux positions :
- une position d'utilisation, dans laquelle ladite assise est orientée face à la route, et dans laquelle des moyens de verrouillage comprenant un élément de verrouillage solidaire de la partie supérieure du dossier de ladite assise et un élément de verrouillage solidaire de ladite embase sont verrouillés;
- au moins une position d'installation, dans laquelle ladite assise est orientée vers une portière d'un véhicule, et dans laquelle lesdits éléments de verrouillage sont déverrouillés,

un premier desdits éléments de verrouillage comprend au moins un crochet mobile pouvant passer d'une position déverrouillée à une position verrouillée dans laquelle il coopère avec un élément d'accrochage fixe du second desdits éléments de verrouillage, caractérisé en ce que lesdits moyens de verrouillage comprennent au mois une gâchette pouvant prendre deux positions :
- une position de repos dans laquelle ladite ou lesdites gâchettes maintiennent ledit crochet dans sa position déverrouillée;
- une position de libération dans laquelle ledit crochet passe dans sa position verrouillée.

D'autres caractéristiques de l'invention sont décrites dans les revendications dépendantes.

Préférentiellement, au moins une desdites gâchette passe dans ladite position de libération sous l'action dudit élément fixe, lorsque ladite assise passe d'une desdites position d'installation à ladite position d'utilisation.

Ainsi, dès que l'assise du siège auto pour enfant passe dans la position d'utilisation, le système de solidarisation de la partie supérieure du dossier de l'assise avec l'embase se verrouille et le dossier est donc correctement maintenu dans sa partie supérieure.

Avantageusement, au moins une desdites gâchette est configurée de façon à passer dans ladite position de libération selon deux modes :
- lorsque ledit dossier est pivoté selon une direction sensiblement parallèle audit dossier ;
- lorsque ledit dossier est pivoté ou selon une direction sensiblement perpendiculaire audit dossier.

Ainsi, la solidarisation de la partie supérieure du dossier du siège auto pour enfant selon l'invention avec l'embase se fait selon deux modes de verrouillage (ou modes de fixation) :
- un premier mode de verrouillage, dit mode normal, dans lequel les éléments de verrouillage du dossier du siège auto pour enfant et de l'embase se solidarisent automatiquement dans la position d'utilisation au cours du passage d'une des positions d'installation à la position d'utilisation;
- un second mode de verrouillage, dit mode dégradé (correspondant à une mauvaise utilisation ( ou « misuse » en anglais)), dans lequel les éléments de verrouillage du dossier du siège auto pour enfant et de l'embase se solidarisent dès que le siège auto pour enfant se trouve dans la position d'utilisation, sous l'effet d'une pression exercée selon une direction sensiblement perpendiculaire au dossier de l'assise du siège auto pour enfant tendant à rapprocher le dossier de l'embase.
   La solidarisation de la partie supérieure du dossier du siège auto pour enfant selon l'invention avec l'embase peut donc être correctement effectuée dans la position d'utilisation quelles que soient les circonstances dans lesquelles l'assise du siège auto pour enfant pivote d'une position d'installation à la position d'utilisation.
   Cette approche confère donc au siège auto pour enfant selon l'invention de bonnes qualités notamment en terme de sécurité.
   Selon une approche préférée de l'invention, ledit crochet est associé à des premiers moyens de rappel qui tendent à le ramener dans ladite position verrouillée.
   Ainsi, dès qu'au moins une desdites gâchettes passe dans la position dans laquelle elle libère le crochet, celui-ci passe automatiquement dans sa position verrouillée de façon que la partie supérieure du dossier de l'assise soit solidarisée avec l'embase.
   Avantageusement, la ou lesdites gâchettes sont associées à des seconds moyens de rappel qui tendent à la ou les ramener dans ladite position de repos.
   Ainsi, dès que l'assise est pivotée depuis la position d'utilisation vers une position d'installation, et que l'élément fixe n'agit plus sur au moins une desdites gâchettes, celle-ci maintient le crochet dans sa position déverrouillée de sorte que l'assise peut être pivotée librement.
   Selon un aspect avantageux de l'invention, le siège auto pour enfant comprend des moyens de déverrouillage permettant de faire passer ledit crochet dans ladite position déverrouillée.
   Il devient alors aisé de faire pivoter l'assise vers une position d'installation.
   Avantageusement, lesdits moyens de déverrouillage sont commandés de façon déportée par au moins un câble de commande.
   Cette approche confère au siège auto pour enfant de bonnes qualités sur le plan ergonomique, et est simple et peu coûteuse à mettre en oeuvre.
   Selon une variante de l'invention, le siège auto pour enfant comprend des moyens de contrôle visuel du passage dudit crochet dans ladite position verrouillée.
   Un utilisateur peut alors contrôler facilement si la partie supérieure du dossier de l'assise est correctement solidarisée à l'embase. Ceci peut permettre d'éviter que l'utilisateur ne prenne la route alors que le siège auto pour enfant n'est pas verrouillé, et donc d'améliorer la sécurité d'un enfant prenant place dans le siège auto pour enfant.
   Selon une autre variante de l'invention, le siège auto pour enfant comprend deux gâchettes, et en ce que ledit crochet passe dans ladite position verrouillée lorsque lesdites deux gâchettes sont dans ladite position de libération.
   Le crochet est donc maintenu en position déverrouillé par au moins une gâchette dès lors que l'assise quitte la position d'utilisation.
   De façon préférentielle, lesdites gâchettes sont montées symétriquement par rapport audit crochet.
   Selon une autre approche préférée de l'invention, ledit siège auto pour enfant comprend des moyens d'indexation contrôlant un placement correct de ladite assise dans ladite position d'utilisation.
   Ceci permet d'assurer le bon positionnement de l'assise dans la position d'utilisation lorsqu'elle est pivotée dans sa direction, et de garantir un bon verrouillage du système de solidarisation de la partie haute du dossier de l'assise avec l'embase.
   Avantageusement, lesdits moyens d'indexation comprennent au moins un élément mobile pouvant prendre au moins deux positions, une position dans laquelle ils autorisent une rotation de ladite assise vers la droite, une position dans laquelle ils autorisent une rotation de l'assise vers la gauche.
   Le siège auto pour enfant peut ainsi tout aussi bien être placé à droite ou à gauche à l'intérieur de l'habitacle d'un véhicule ce qui lui confère une plus grande modularité.

### 5. Liste des figures

D'autres caractéristiques et avantages de l'invention apparaîtront plus clairement à la lecture de la description suivante de modes de réalisation préférentiels, donnés à titre de simples exemples illustratifs et non limitatif, et des dessins annexés, parmi lesquels :
- les figures 1 et 2 illustrent respectivement un siège auto pour enfant selon l'invention placé dans la position d'utilisation et une portion supérieure de siège auto pour enfant dans une position d'installation ;
- la figure 3 est une vue en perspective illustrant un premier mode de réalisation d'un système de solidarisation de la partie supérieure du dossier d'un siège auto pour enfant selon l'invention à l'embase, dans lequel des gâchettes mobiles libèrent un crochet mobile, solidaire du siège auto pour enfant, de façon qu'il se solidarise à un élément fixe, solidaire de l'embase, lorsque le siège auto pour enfant passe d'une position d'installation à la position d'utilisation ;
- les figures 4 à 8 illustrent différentes vues de côté du système de solidarisation représenté à la figure 3 sur lesquelles le crochet est tantôt en position verrouillée (figures 4, 6, 7) et tantôt en position déverrouillée (figures 5, 8) ;
- les figures 9a et 9b illustrent un mode de réalisation dans lequel le siège auto pour enfant selon l'invention met en oeuvre des moyens d'indexation de la rotation de l'assise.

### 6. Description d'un mode de réalisation de l'invention

### 6.1. Rappel du principe de l'invention

L'invention concerne donc un siège auto pour enfant pivotant entre au moins une position d'installation, dans laquelle il est amené face à la porte d'un véhicule pour permettre l'installation ou la désinstallation de l'enfant, et une position d'utilisation, dans laquelle il est face à la route. Ce siège auto pour enfant comprend des éléments de verrouillage permettant la solidarisation de la partie haute de son dossier à l'embase, dans la position d'utilisation.

Selon l'invention, les éléments de verrouillage peuvent se solidariser (ou se verrouiller) selon deux modes de verrouillage. Selon un premier mode de verrouillage, dit mode normal, les éléments de verrouillage se verrouillent automatiquement dans la position d'utilisation au cours du passage du siège auto pour enfant d'une des positions d'installation à la position d'utilisation (face à la route). Selon un second mode de verrouillage, dit mode dégradé, les éléments de verrouillage se verrouillent automatiquement dès lors que le siège auto pour enfant se trouve dans la position face à la route, sous l'effet d'une pression, due par exemple à l'élasticité du dossier d'un siège auto pour enfant, exercée sur le dossier du siège auto pour enfant selon une direction sensiblement perpendiculaire au dossier.

Ce second mode de verrouillage a pour avantage de garantir une bonne fixation du siège auto pour enfant, lorsqu'un utilisateur ne respecte pas les conditions normales d'utilisation. Ainsi, on supprime les risques pour l'enfant, même en cas de mauvaise utilisation (« misuse » en anglais).

Ainsi, quelles que soient les circonstances dans lesquelles l'assise du siège auto pour enfant pivote d'une des positions d'installation à la position d'utilisation, les éléments de verrouillage de la partie supérieure du dossier du siège auto pour enfant selon l'invention se solidarisent avec l'embase de façon satisfaisante.

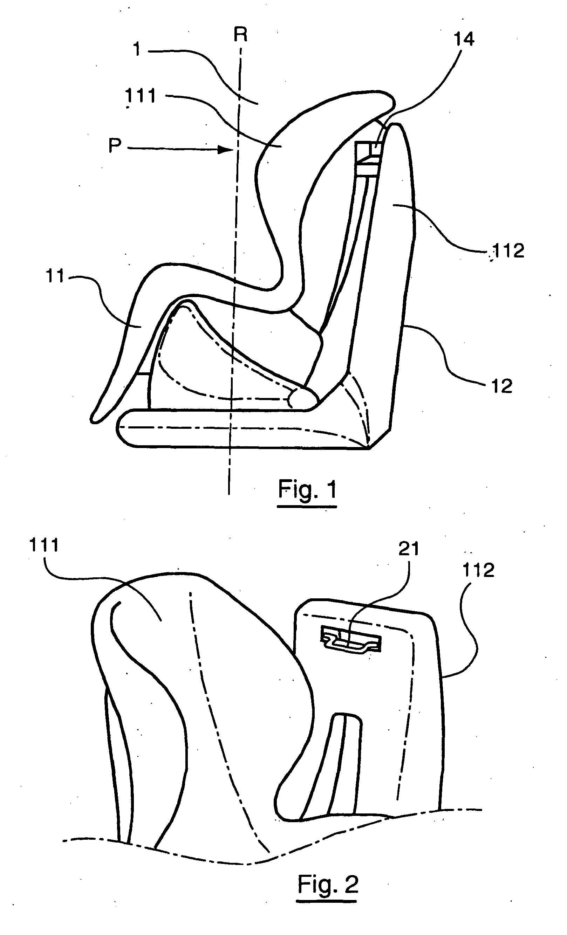

Les figures 1 et 2 illustrent le principe général de l'invention.

Tel qu'illustré sur ces figures, une assise 11 d'un siège auto pour enfant pivotant 1 est montée pivotante sur une embase 12, entre une position face à la route (figure 1) et une position face à la portière d'un véhicule (figure 2). Un premier élément de verrouillage, formé par exemple d'un point d'ancrage fixe 14, est solidaire du dossier 111. Un crochet 21 mobile est solidaire d'une partie verticale 112 de l'embase 12. Ce crochet 21 est mobile entre une position déverrouillée dans laquelle il est éloigné du point d'ancrage 14, et une position verrouillée dans laquelle il coopère avec le point d'ancrage 14.

Dans les différents modes de réalisation présentés plus loin, le crochet peut être indifféremment solidaire de l'assise ou de l'embase et l'ancrage peut être indifféremment solidaire de l'assise ou de l'embase.

Les deux modes de verrouillage discutés plus haut (mode normal et mode dégradé) vont maintenant être illustrés.

Lorsque l'assise 11 du siège auto pour enfant 1 pivote autour d'un axe R, c'est-à-dire selon une direction sensiblement parallèle au dossier 111 de l'assise 11, pour passer d'une position d'installation à la position d'utilisation, le crochet 21 passe dans une position verrouillée dans laquelle il coopère, ou se solidarise, avec le point d'ancrage 14.

En raison d'une mauvaise manipulation, il pourrait arriver que le crochet 21 ne se solidarise pas avec le point d'ancrage 14 au cours du pivotement. Dans ce cas, une pression suivant la flèche P, par exemple due à l'élasticité du dossier 111 de l'assise 11, tend à déplacer légèrement le dossier 111 de l'assise 11 selon une direction sensiblement perpendiculaire au dossier 111, et provoque le passage du crochet 21 en position verrouillée, c'est-à-dire sa solidarisation avec le point d'ancrage 14, quand le siège auto pour enfant est dans la position d'utilisation.

Ainsi, si le crochet 21 et le point d'ancrage 14 ne se solidarisent pas directement au cours du pivotement, l'utilisateur n'aura pas à replacer l'assise du siège auto pour enfant dans une position d'installation et à la refaire pivoter dans la position d'utilisation de façon quelle crochet 21 passe en position verrouillée. On reviendra dans la position verrouillée dès que l'utilisateur cessera d'éloigner les deux éléments (par exemple sous l'effet de l'élasticité de ceux-ci).

Une fois en position verrouillé, le crochet 21 prévient toute rotation de l'assise 11 du siège auto pour enfant 1 vers l'avant d'un véhicule qui pourrait survenir suite à un choc produit par exemple au cours d'un accident.

### 6.2. Exemple d'un mode de réalisation : système à deux gâchettes mobiles

### 6.2.1. Le système à deux gâchettes mobiles

On présente, en relation avec les figures 2 à 8, un exemple de mode de réalisation d'un système de siège auto pour enfant selon l'invention.

Dans ce mode de réalisation particulier, un élément de verrouillage, représenté par un point d'ancrage fixe 202, est solidaire de la face tournée vers l'intérieur de l'habitacle d'un véhicule d'une partie 201 d'une embase destinée à venir en appui sur un dossier d'un siège du véhicule (non représenté ici). Le point d'ancrage 202 prend ici la forme d'un fil présentant un profil sensiblement en forme de « U ».

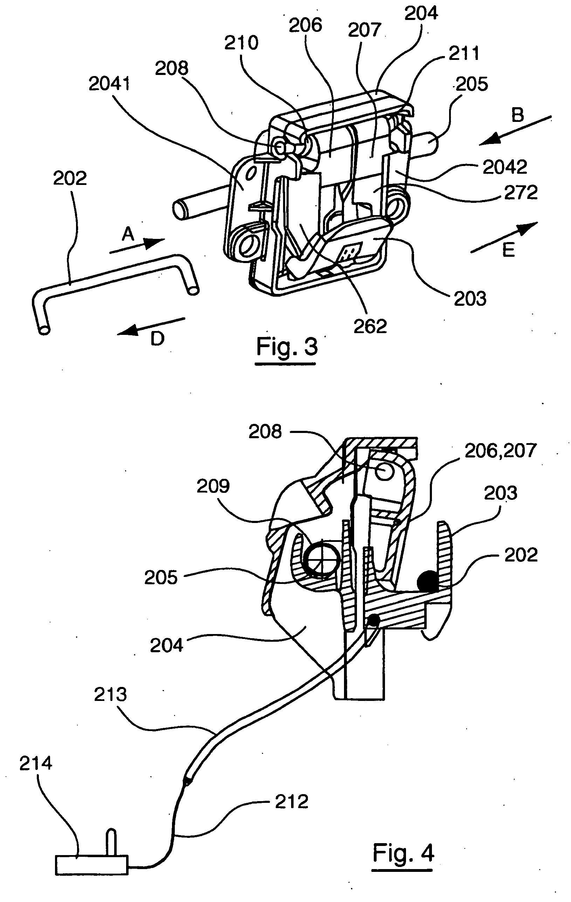

La figure 3 illustre un autre élément de verrouillage prenant la forme d'un crochet 203 mobile entre une position verrouillée et une position déverrouillée, et qui est solidaire de la partie haute du dossier de l'assise (non représentée) d'un siège auto pour enfant.

Le crochet 203 est solidarisé à un boîtier 204 par l'intermédiaire d'un axe 205. Le crochet 203 est monté libre en rotation autour de l'axe 205. Des moyens de rappel, qui mettent ici en oeuvre un ressort de torsion 209, tendent à ramener le crochet 203 dans une position verrouillée illustrée figures 4, 6 et 7, dans laquelle il coopère avec le point d'ancrage 202 solidaire de l'embase 201.

Le boîtier 204 est solidarisé au dossier de l'assise 11.

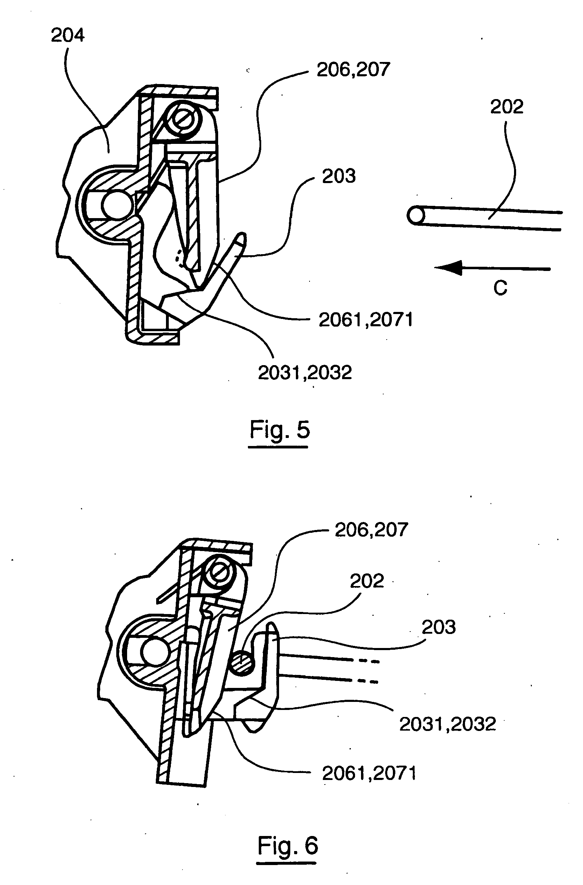

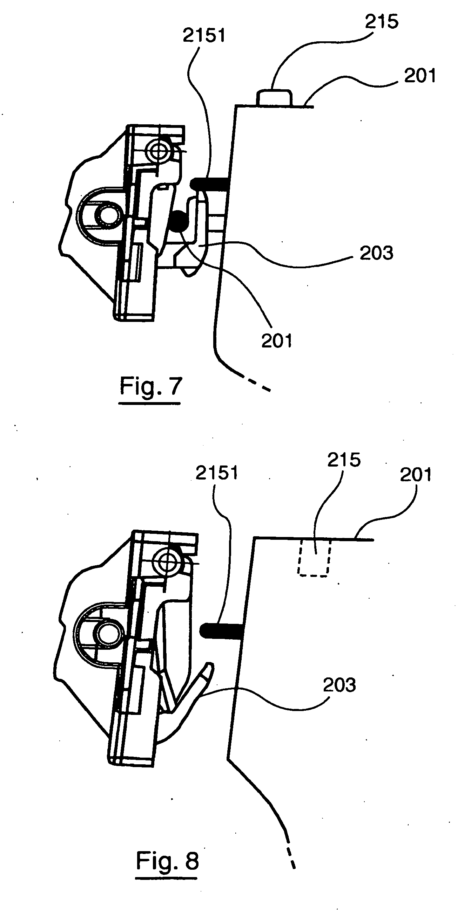

Deux gâchettes 206 et 207 mobiles entre une position de repos (illustrée figures 5 et 8) et une position de libération (illustrée figures 4, 6 et 7) sont liées au boîtier 204 par l'intermédiaire d'un axe 208. Les gâchettes 206 et 207 sont montées libres en rotation autour de l'axe 208. Des moyens de rappel, qui mettent ici en oeuvre des ressorts de torsion 210 et 211, tendent à ramener les gâchettes 206 et 207 dans une position de repos dans laquelle elles bloquent le crochet 203 dans sa position déverrouillée tel qu'illustrée aux figures 5 et 8.

Dans le mode de verrouillage normal, le fil 202 solidaire de la partie 201 de l'embase se présente par exemple suivant la flèche A. Le fil 202 entre en contact successivement avec les gâchettes 206 et 207 et agit progressivement contre l'effort de rappel imprimé par les ressorts de torsion 210 et 211 aux gâchettes 206 et 207 de sorte qu'elles passent de la position de repos à la position de libération dans laquelle elles libèrent le crochet 203. Les gâchettes 206 et 207 présentent chacune un plan incliné 262, 272 destiné à coopérer avec le fil 202 de manière à faciliter leur passage de la position de repos à la position de libération. Après que le crochet 203 est libéré, un ressort de torsion 209 lui imprime un tel effort qu'il passe de la position déverrouillée à la position verrouillée dans laquelle le crochet 203 coopère avec le fil 202 (figures 4, 6, 7). Le siège auto pour enfant est alors bloqué en position d'utilisation.

Le siège auto pour enfant selon l'invention peut tout aussi bien être installé dans la partie droite ou gauche de l'habitacle d'un véhicule. S'il est placé dans la région droite de l'habitacle d'un véhicule (quand on se situe à l'intérieur d'un véhicule, face à la route), le fil 202 se présente alors suivant la flèche B. Dans ce cas, le passage du crochet 203 de la position déverrouillée à la position verrouillée détaillé plus haut reste identique, mis à part le fait que le fil 202 entre en contact successivement avec les gâchettes 207 puis 206 au cours du pivotement.

Dans le mode de verrouillage dégradé, le fil 202 se présente suivant la flèche C (figure 5). Il entre en contact simultanément avec les gâchettes 206 et 207, et agit contre l'effort de rappel imprimé par les ressorts de torsion 210 et 211 aux gâchettes 206 et 207 de sorte qu'elles passent de la position de repos, illustrée aux figures 5 et 8, à la position de libération, illustrée aux figures 4, 6, 7, dans laquelle elles libèrent le crochet 203. Après que le crochet 203 est libéré, le ressort de torsion 209 lui imprime un tel effort qu'il passe de la position déverrouillée à la position verrouillée dans laquelle le crochet 203 coopère fil 202. Le siège auto pour enfant est alors bloqué en position d'utilisation.

Pour obtenir le déverrouillage du crochet 203, de façon à faire passer le siège auto pour enfant de la position d'utilisation à l'une des positions d'installation, le crochet 203 doit être désengagé du fil 202. Cela peut par exemple être obtenu à l'aide d'un système à câble.

Un câble 212, passant dans une gaine 213, est relié à l'une de ses extrémités au crochet 203. L'autre extrémité du câble 212 est reliée à un ou plusieurs moyens de commande pouvant prendre la forme d'une tirette 214 localisée par exemple au niveau des accoudoirs du siège auto pour enfant.

Lorsque l'on tire sur le câble 212 par l'intermédiaire de la tirette 214, le crochet 203 est placé en position déverrouillée de sorte qu'il n'est plus engagé avec le fil 202. Le siège auto pour enfant peut alors pivoter.

Quand on fait pivoter l'assise du siège auto pour enfant de la position d'utilisation à une position d'installation suivant la flèche D, le fil 202 libère en premier lieu la gâchette 207. Sous l'effet du ressort de torsion 211, la gâchette 207 passe de la position de libération à la position de repos dans laquelle elle bloque le crochet 203 en position déverrouillée. Les gâchettes 206 et 207 présentent une portion inférieure 2061 et 2071 inclinée qui est destinée à coopérer avec des parties inclinées 2031 et 2032 présentes sur le crochet 203 de façon à faciliter leur passage de la position de libération à la position de repos (et inversement). Si l'on continue le mouvement selon la flèche D, le fil 202 libère la gâchette 206, qui sous l'effet du ressort de torsion 210 passe de la position de libération à la position de repos dans laquelle elle vient à son tour bloquer le crochet 203 en position déverrouillée. Le siège auto pour enfant peut alors être pivoté.

Le siège auto pour enfant pouvant être installé dans la région droite ou gauche de l'habitacle d'un véhicule, un pivotement de l'assise suivant la flèche E conduira de la même façon au passage du crochet 203 de sa position verrouillée à sa position déverrouillée, mis à part le fait que la gâchette 206 sera libérée la première.

### 6.2.2. Double gâchette

Le fait que le système de solidarisation met en oeuvre deux gâchettes permet, si l'utilisateur relâche la tirette avant que les deux cales mobiles ne soient en position de repos, au crochet 203 de se trouver néanmoins bloqué dans la position déverrouillée par la première gâchette libérée par le fil 202.

### 6.2.3. Indicateur de bon accrochage

Dans ce mode de réalisation particulier, on prévoit qu'un siège auto pour enfant selon l'invention comprend un indicateur de bon accrochage permettant à l'utilisateur, c'est-à-dire à la personne qui manipule le siège auto pour enfant, de s'assurer que le siège auto pour enfant est bloqué en position d'utilisation et donc que les éléments de verrouillage permettant la solidarisation de la partie haute du dossier de l'assise du siège auto pour enfant avec son embase sont convenablement solidarisés.

Un capot 215 est mobile entre une position déployée dans laquelle il est visible par l'utilisateur et une position escamotée dans laquelle il est dissimulé à l'intérieur de l'embase du siège auto pour enfant et n'est donc pas visible. Le capot 215 est associé à un pêne de prise d'information 2151 débouchant de l'embase. Un moyen de rappel mettant par exemple en oeuvre un ressort de compression (n'apparaissant pas sur les figures) tend à ramener le capot 215 dans sa position escamotée.

Lorsque le siège auto pour enfant pivote d'une position d'installation à la position d'utilisation, le crochet 203 coopère avec le fil 202 et entre en contact avec le pêne 2151. Le crochet 203 s'oppose à la force de compression imprimée par le ressort au capot 215 de sorte que celui-ci passe de sa position escamotée à sa position déployée et devient visible par l'utilisateur du siège auto pour enfant (figure 7).

Le capot 215 peut par exemple présenter une couleur particulière ou comporter un message informant l'utilisateur du siège auto pour enfant sur l'état de solidarisation du système de solidarisation.

Lorsque le siège auto pour enfant pivote de la position d'utilisation à une position d'installation, le crochet 203 se désolidarise et libère le pêne 2151 de façon que, sous l'effet du ressort de compression, le capot 215 passe dans une position escamotée dans laquelle il n'est pas visible par l'utilisateur du siège auto pour enfant (figure 8).

L'utilisateur est ainsi en mesure d'apprécier si le crochet est en position verrouillée ou non, et donc si le siège auto pour enfant est bloqué en position d'utilisation.

### 6.3. Autres caractéristiques

Dans une variante des différents modes de réalisation décrits précédemment, on prévoit que le siège auto pour enfant selon l'invention comprend des moyens d'indexation, contrôlant la rotation de l'assise et formant butée, de façon à garantir le bon positionnement de l'assise dans la position d'utilisation lorsqu'elle est pivotée dans sa direction.

Un premier mode de réalisation de ces moyens de limitation peut être celui décrit dans le brevet portant le numéro EP-1625967.

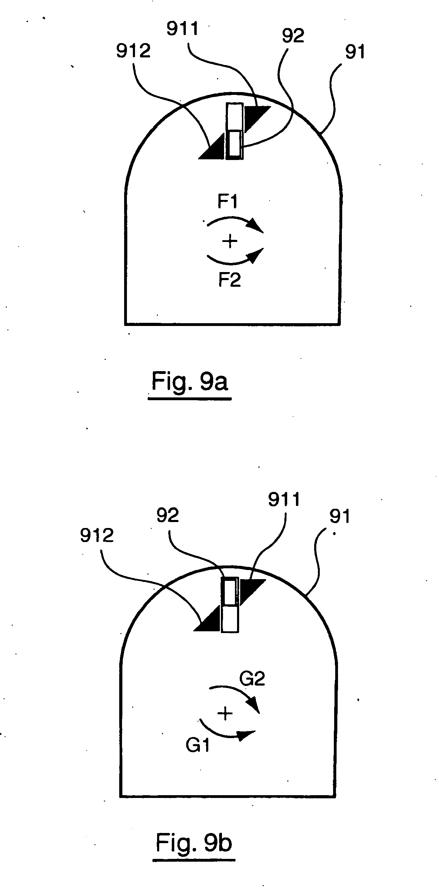

Un autre mode de réalisation peut être celui illustré aux figure 9a et 9b, dans lequel l'assise pivotante 91 présente deux butées 911 et 912 sur sa partie inférieure. Une butée mobile 92, solidaire de l'embase (non représentée), est destinée à coopérer avec la butée 911 ou la butée 912 dans la position utilisation, de façon à garantir que l'assise 91 soit bien positionnée dans la position utilisation, et que le système de solidarisation de la partie supérieur du dossier de l'assise 91 et de l'embase se verrouille correctement.

La butée mobile 92 peut prendre deux positions selon que le siège auto pour enfant est placé à gauche ou à droite dans l'habitacle du véhicule.

Lorsque le siège auto pour enfant est placé à gauche dans le véhicule, la butée mobile 92 est placée dans la position illustrée à la figure 9a. L'assise 91 peut alors être pivotée selon la flèche F1 jusqu'à ce qu'elle arrive dans la position d'utilisation dans laquelle la butée mobile 92 coopère avec la butée 912 de façon que l'assise 91 soit bien positionnée dans la position d'utilisation et que le système de solidarisation se verrouille correctement. L'assise 91 peut être ramenée en position d'installation par pivotement selon la flèche F2.

Lorsque le siège auto pour enfant est placé à droite dans le véhicule, la butée mobile 92 est placée dans la position illustrée à la figure 9b. L'assise 91 peut alors être pivotée selon la flèche G1 jusqu'à ce qu'elle arrive dans la position d'utilisation dans laquelle la butée mobile 92 coopère avec la butée 911 de façon que l'assise 91 soit bien positionnée dans la position d'utilisation et que le système de solidarisation se verrouille correctement. L'assise 91 peut être ramenée en position d'installation par pivotement selon la flèche G2.

La face inclinée des butées 911, 912 permet de ramener automatiquement la butée mobile 92 dans la bonne position (figure 9a ou 9b) si un utilisateur ne la positionne pas correctement par mauvaise utilisation (« misuse »).

Les différentes pièces constitutives des systèmes de solidarisation mis en oeuvre dans le mode de réalisation particulier d'un siège auto pour enfant selon l'invention décrit ci-avant, en particulier le crochet et le point d'ancrage, sont réalisés dans des matériaux présentant des caractéristiques mécaniques suffisantes de manière à résister aux efforts pouvant résulter d'un choc occasionné par exemple au cours d'un accident. Les fils et les crochets peuvent être réalisés en matériau métallique par exemple.

Selon d'autres modes de réalisation, une gâchette unique peut être prévue, ou un ensemble de trois (ou plus) gâchettes.

## Revendications

1. Siège auto pour enfant, comportant une embase (12, 201) et une assise (11, 91) pivotant par rapport à ladite embase (12, 201) de façon à prendre au moins deux positions :
- une position d'utilisation, dans laquelle ladite assise (11, 91) est orientée face à la route, et dans laquelle des moyens de verrouillage comprenant un élément de verrouillage solidaire de la partie supérieure du dossier (111) de ladite assise (11, 91) et un élément de verrouillage solidaire de ladite embase (12, 201) sont verrouillés;
- au moins une position d'installation, dans laquelle ladite assise (11, 91) est orientée vers une portière d'un véhicule, et dans laquelle lesdits éléments de verrouillage sont déverrouillés,
un premier desdits éléments de verrouillage comprenant au moins un crochet (203) mobile pouvant passer d'une position déverrouillée à une position verrouillée dans laquelle il coopère avec un élément d'accrochage fixe (202) du second desdits éléments de verrouillage,
**caractérisé en ce que** lesdits moyens de verrouillage comprennent au moins une gâchette (206, 207) pouvant prendre deux positions :
- une position de repos dans laquelle ladite ou lesdites gâchettes (206, 207) maintiennent ledit crochet (203) dans sa position déverrouillée;
- une position de libération dans laquelle ledit crochet (203) passe dans sa position verrouillée.

2. Siège auto pour enfant selon la revendication 1, **caractérisé en ce que** au moins une desdites gâchette (206, 207) passe dans ladite position de libération sous l'action dudit élément fixe (202), lorsque ladite assise passe d'une desdites position d'installation à ladite position d'utilisation.

3. Siège auto pour enfant selon l'une quelconque des revendications 1 et 2,
**caractérisé en ce que** au moins une desdites gâchette (206, 207) est configurée de façon à passer dans ladite position de libération selon deux modes :
- lorsque ledit dossier (111) est pivoté selon une direction sensiblement parallèle audit dossier (111);
- lorsque ledit dossier (111) est pivoté ou selon une direction sensiblement perpendiculaire audit dossier (111).

4. Siège auto pour enfant selon l'une quelconque des revendications 1 à 3,
**caractérisé en ce que** ledit crochet (203) est associé à des premiers moyens de rappel (209) qui tendent à le ramener dans ladite position verrouillée.

5. Siège auto pour enfant selon l'une quelconque des revendications 1 à 4,
**caractérisé en ce que** la ou lesdites gâchettes (206, 207) sont associées à des seconds moyens de rappel (210, 211) qui tendent à la ou les ramener dans ladite position de repos.

6. Siège auto pour enfant selon l'une quelconque des revendications 1 à 5,
**caractérisé en ce qu'**il comprend des moyens de déverrouillage permettant de faire passer ledit crochet (203) dans ladite position déverrouillée.

7. Siège auto pour enfant selon la revendication 6, **caractérisé en ce que** lesdits moyens de déverrouillage sont commandés de façon déportée par au moins un câble de commande (212).

8. Siège auto pour enfant selon l'une quelconque des revendications 1 à 7,
**caractérisé en ce qu'**il comprend des moyens de contrôle visuel (215) du passage dudit crochet (203) dans ladite position verrouillée.

9. Siège auto pour enfant selon l'une quelconque des revendications 1 à 8,
**caractérisé en ce qu'**il comprend deux gâchettes (206, 207), et **en ce que** ledit crochet (203) passe dans ladite position verrouillée lorsque lesdites deux gâchettes (206, 207) sont dans ladite position de libération.

10. Siège auto pour enfant selon l'une quelconque des revendications 1 à 9,
**caractérisé en ce que** lesdites gâchettes (206, 207) sont montées symétriquement par rapport audit crochet (203).

11. Siège auto pour enfant selon l'une quelconque des revendications 1 à 10,
**caractérisé en ce que** ledit siège comprend des moyens d'indexation (911, 912, 92), contrôlant un placement correct de ladite assise (11, 91) dans ladite position d'utilisation.

12. Siège auto pour enfant selon la revendication 11, **caractérisé en ce que** lesdits moyens d'indexation comprennent au moins un élément mobile (92) pouvant prendre au moins deux positions, une position dans laquelle ils autorisent une rotation de ladite assise (11) vers la droite, une position dans laquelle ils autorisent une rotation de l'assise vers la gauche.

## Claims

1. Child's car seat, comprising a base (12, 201) and a seat (11, 91) which pivots relative to the said base (12, 201) such as to assume at least two positions:
- a position of use, in which the said seat (11, 91) is oriented facing the road, and wherein locking means comprising a locking element which is integral with the upper part of the back (111) of the said seat (11, 91) and a locking element which is integral with the said base (12, 201) are locked;
- at least one position of installation, in which the said seat (11, 91) is oriented towards a door of a vehicle, and wherein the said locking elements are unlocked;
a first one of the said locking elements comprising at least one mobile hook (203) which can go from an unlocked position to a locked position, in which it co-operates with a fixed securing element (202) of the second one of the said locking elements,
**characterised in that** the said locking means comprise at least one pawl (206, 207) which can assume two positions:
- a position of rest in which the said pawl(s) (206, 207) maintain(s) the said hook (203) in its unlocked position; and
- a position of release in which the said hook (203) goes into its locked position.

2. Child's car seat according to claim 1, **characterised in that** at least one of the said pawls (206, 207) goes into the said position of release under the action of the said fixed element (202), when the said seat goes from one of the said positions of installation to the said position of use.

3. Child's car seat according to either of claims 1 and 2, **characterised in that** at least one of the said pawls (206, 207) is configured such as to go into the said position of release according to two modes:
- when the said back (111) is pivoted according to a direction substantially parallel to the said back (111);
- when the said back (111) is pivoted or according to a direction substantially perpendicular to the said back (111).

4. Child's car seat according to any one of claims 1 to 3, **characterised in that** the said hook (203) is associated with first return means (209) which tend to return it to the said locked position.

5. Child's car seat according to any one of claims 1 to 4, **characterised in that** the said pawl(s) (206, 207) is/are associated with second return means (210, 211) which tend to return it/them to the said position of rest.

6. Child's car seat according to any one of claims 1 to 5, **characterised in that** it comprises unlocking means which make it possible to make the said hook (203) go into the said unlocked position.

7. Child's car seat according to claim 6, **characterised in that** the said unlocking means are controlled in a remote manner by at least one control cable (212).

8. Child's car seat according to any one of claims 1 to 7, **characterised in that** it comprises means (215) for checking visually the passage of the said hook (203) into the said locked position.

9. Child's car seat according to any one of claims 1 to 8, **characterised in that** it comprises two pawls (206, 207), and **in that** the said hook (203) goes into the said locked position when the said two pawls (206, 207) are in the said position of release.

10. Child's car seat according to any one of claims 1 to 9, **characterised in that** the said pawls (206, 207) are fitted symmetrically relative to the said hook (203).

11. Child's car seat according to any one of claims 1 to 10, **characterised in that** the said seat comprises indexing means (911, 912, 92) which control correct placing of the said seat (11, 91) in the said position of use.

12. Child's car seat according to claim 11, **characterised in that** the said indexing means comprise at least one mobile element (92) which can assume at least two positions, i.e. a position in which they permit rotation of the said seat (11) towards the right, and a position in which they permit rotation of the seat towards the left.

## Patentansprüche

1. Autokindersitz, der ein Grundteil (12, 201) und ein gegenüber dem besagten Grundteil (12, 201) schwenkbares Sitzteil (11, 91) aufweist, so dass der Sitz mindestens zwei Positionen einnehmen kann:
- eine Nutzungsposition, bei welcher das besagte Sitzteil (11, 91) zur Straße bzw. in Fahrtrichtung gewandt ist und wobei Verriegelungsmittel, die ein mit dem oberen Teil der Rücklehne (111) des besagten Sitzteils (11, 91) verbundenes Verriegelungselement sowie ein mit dem besagten Grundteil (12, 201) verbundenes Verriegelungselement aufweisen, verriegelt sind;
- mindestens eine Installationsposition, bei der das besagte Sitzteil (11, 91) zu einer Fahrzeugtür hin gewendet ist und bei der die besagten Verriegelungselemente entriegelt sind,
wobei ein erstes dieser besagten Verriegelungselemente mindestens einen beweglichen Haken (203) aufweist, der von einer entriegelten in eine verriegelte Position übergeht, in der er mit einem feststehenden Element zum Einhaken (202) des zweiten der besagten Verriegelungselemente zusammenwirkt,
**dadurch gekennzeichnet, dass** die besagten Verriegelungselemente mindestens ein Steuerteil (frz. gâchette) (206, 207) aufweisen, welches zwei Positionen einnehmen können:
- eine Ruheposition, in der das besagte Steuerteil bzw. die besagten Steuerteile (206, 207) den besagten Haken (203) in der entriegelten Position halten;
- eine Freigabeposition, in welcher der besagte Haken (203) in die verriegelte Position übergeht.

2. Autokindersitz nach Anspruch 1, **dadurch gekennzeichnet, dass** mindestens eines der besagten Steuerteile (206, 207) unter der Einwirkung des besagten feststehenden Elementes (202) in die besagte Freigabeposition übergeht, wenn das besagte Sitzteil von der Installationsposition in die Nutzungsposition übergeht.

3. Autokindersitz nach einem der Ansprüche 1 oder 2, **dadurch gekennzeichnet, dass** mindestens eines der besagten Steuerteile (206, 207) so konfiguriert ist, dass es nach zweierlei Weisen in die besagte Freigabeposition übergeht:
- wenn die besagte Rücklehne (111) in etwa parallel zur Rücklehne (111) geschwenkt wird;
- wenn die besagte Rücklehne (111) in etwa senkrecht zur Rücklehne (111) geschwenkt wird.

4. Autokindersitz nach einem der Ansprüche 1 bis 3, **dadurch gekennzeichnet, dass** der besagte Haken (203) mit ersten Rückholmitteln (209) verbunden ist, welche bestrebt sind, ihn in die besagte verriegelte Position zurückzuführen.

5. Autokindersitz nach einem der Ansprüche 1 bis 4, **dadurch gekennzeichnet, dass** das Steuerteil bzw. die Steuerteile (206, 207) mit zweiten Rückholmitteln (210, 211) verbunden sind, welche bestrebt sind, es bzw. sie in die besagte Ruheposition zurückzuführen.

6. Autokindersitz nach einem der Ansprüche 1 bis 5, **dadurch gekennzeichnet, dass** er über Entriegelungsmittel verfügt, die es ermöglichen, den besagten Haken (203) in die entriegelte Position zu überführen.

7. Autokindersitz nach Anspruch 6, **dadurch gekennzeichnet, dass** die besagten Entriegelungsmittel durch mindestens ein Steuerseil (212) in schiebender Weise (frz.: façon déportée) gesteuert werden.

8. Autokindersitz nach einem der Ansprüche 1 bis 7, **dadurch gekennzeichnet, dass** er über visuelle Kontrollmittel (215) zur Überführung des besagten Hakens (203) in die besagte verriegelte Position verfügt.

9. Autokindersitz nach einem der Ansprüche 1 bis 8, **dadurch gekennzeichnet, dass** er zwei Steuerteile (206, 207) aufweist und, dass der besagte Haken (203) in die besagte verriegelte Position übergeht, wenn die besagten zwei Steuerteile (206, 207) sich in der besagten Freigabeposition befinden.

10. Autokindersitz nach einem der Ansprüche 1 bis 9, **dadurch gekennzeichnet, dass** die besagten Steuerteile (206, 207) symmetrisch zu dem besagten Haken (203) angebracht sind.

11. Autokindersitz nach einem der Ansprüche 1 bis 10, **dadurch gekennzeichnet, dass** der besagte Sitz Indexierungsmittel (911, 912, 92) aufweist, welche die ordnungsgemäße Stellung des besagten Sitzteils (11, 91) in der besagten Nutzungsposition sicherstellen.

12. Autokindersitz nach Anspruch 11, **dadurch gekennzeichnet, dass** die besagten Indexierungsmittel mindestens ein bewegliches Teil (92) aufweisen, das mindestens zwei Positionen einnehmen kann, eine Position, in der sie das Drehen des besagten Sitzteils (11) nach rechts und eine Position, in der sie das Drehen des besagten Sitzteils nach links zulassen.
